# EUROPÄISCHE PATENTANMELDUNG

(11) **EP 4 212 310 A1**
(43) Veröffentlichungstag der Anmeldung: **19.07.2023**
(21) Anmeldenummer: 22151636.2
(22) Anmeldetag: 14.01.2022
(51) Int. Cl.: B29C 65/00, B29C 65/02, B29C 65/38, B29C 65/74

(54) **VERFAHREN UND VORRICHTUNG ZUM VERBINDEN VON KUNSTSTOFFFOLIEN DURCH THERMISCHES FÜGEN SOWIE VERWENDUNG EINER SCHLAGPRESSE**

(71) Anmelder: Fraunhofer-Gesellschaft zur Förderung der angewandten Forschung e.V., 80686 München (DE)
(72) Erfinder: KOTT, Matthias, 01219 Dresden (DE)
(74) Vertreter: Gottfried, Hans-Peter

(57) **Zusammenfassung**

Die Erfindung betrifft ein Verfahren und eine Vorrichtung zum Verbinden von Kunststofffolien (10) durch thermisches Fügen, wobei die Kunststofffolien (10) zwischen Schweißbacken (2, 4) entlang einer Schweißnaht (12) verbunden werden. Nach der Erfindung werden die übereinander angeordneten Kunststofffolien (10) in einem ersten Schritt zwischen einem Paar Schweißbacken (2, 4) mit einer Vorspannkraft Fᵥ gegeneinander gedrückt und in einem zweiten Schritt wirkt ein Schlagimpuls wenigstens einer der Schweißbacken (2, 4) mit zumindest einer ersten Intensität (Fᵢ₁) auf die Kunststofffolien (10) ein und die Schweißnaht (12) wird ausgebildet. Die Erfindung betrifft auch die Verwendung einer Schlagpresse.

## Beschreibung

Die Erfindung betrifft ein Verfahren und eine Vorrichtung zum Verbinden von Kunststofffolien durch thermisches Fügen, wobei die Kunststofffolien zwischen Schweißbacken entlang einer Schweißnaht verbunden werden. Die Erfindung betrifft weiterhin eine Verwendung einer Schlagpresse.

Ein wichtiges Anwendungsgebiet für das thermische Fügen ist das Herstellen und Verschließen von Verpackungen aus Kunststofffolie, z. B. Schlauchbeutel, wobei der Vorgang dort auch als Siegeln bzw. Heißsiegeln bezeichnet wird. Neben Verfahren und Vorrichtungen zum Verbinden von Kunststofffolien durch thermisches Fügen mittels beheizter Schweißbacken, auch als Siegelbacken bezeichnet, die Teile der Kunststofffolien aufschmelzen, gibt es vielfältige Bestrebungen, auf beheizte Schweißbacken zu verzichten. Dafür sind vor allem zwei Gründe ausschlaggebend, das Verpacken wärmeempfindlicher Güter ohne Eintrag zusätzlicher Wärmeenergie und die Verringerung des Energieverbrauchs.

Durch das thermische Fügen mittels Ultraschall kann auf beheizte Schweißbacken verzichtet werden, weil die thermische Wirkung in den zu verschweißenden Folien selbst durch den Energieeintrag der Ultraschallschwingungen hervorgerufen wird. Auf diesem Effekt beruhen die Lösungen zum Ultraschallsiegeln, die beispielsweise die Druckschriften DE 699 26 758 T2, DE 10 2009 046 319 A1 und DE 10 2017 121 572 A1, hier in Kombination mit dem Heißsiegeln, beschreiben. Allerdings sind die für das Ultraschallsiegeln erforderliche maschinentechnische Ausrüstung und die Erzeugung des Ultraschalls sehr aufwändig.

Auch andere Verfahren zur Bearbeitung von Kunststofffolien, wie z. B. das Trennen von Kunststofffolien durch einen Schlagimpuls mittels einer Folienstanze gemäß der Druckschrift DE 10 2015 211 622 A1, sind nicht geeignet, die Kunststofffolien miteinander zu verbinden und eine Schweißnaht auszubilden oder erreichen dies nur, wenn zugleich die Folien an der Schweißnaht getrennt werden.

Es ist daher die Aufgabe der vorliegenden Erfindung, ein robustes, unaufwändiges Verfahren und eine einfache Vorrichtung zum Verbinden von Kunststofffolien durch thermisches Fügen anzubieten, wobei die Kunststofffolien zwischen Schweißbacken entlang einer Schweißnaht verbunden werden. Eine weitere Aufgabe der Erfindung sieht die Verwendung einer Schlagpresse vor.

Die Aufgabe wird gelöst durch ein Verfahren zum Verbinden von Kunststofffolien durch thermisches Fügen, wobei die Kunststofffolien zwischen Schweißbacken entlang einer Schweißnaht verbunden werden. Nach der Erfindung werden die übereinander angeordneten Kunststofffolien in einem ersten Schritt zwischen einem Paar der Schweißbacken mit einer Vorspannkraft gegeneinander gedrückt und in einem zweiten Schritt wirkt ein Schlagimpuls, weitergeleitet durch wenigstens eine der Schweißbacken, mit zumindest einer ersten Intensität auf die Kunststofffolien ein und die Schweißnaht wird ausgebildet. Es ist nicht erforderlich, das Verfahren mit vorgeheizten bzw. vorgewärmten Kunststofffolien durchzuführen. Wegen des schnellen Temperaturanstiegs hat die Materialtemperatur kaum einen Einfluss. Ebenso verhält es sich mit den Schweißbacken, die nicht vorgeheizt bzw. nicht vorgewärmt sein müssen, da die zum Schweißen erforderliche Temperatur in sehr kurzer Zeit während des Impulses in der Folie selbst erzeugt wird.

Bei der Weiterleitung des Schlagimpulses wird von Schallgeschwindigkeit und von einer Stoßimpulszeit von unter 10 ms, vorzugsweise 5 ms, ausgegangen. Für den Impuls Stahl/Stahl wurde für die Strecke von 10 cm eine Zeit von 0,25 ms errechnet. Mit dem Schlagimpuls wird eine mit dem Ultraschallsiegeln vergleichbare Wirkung auf vergleichbare Materialien erzielt, allerdings wird anstelle einer großen Zahl von Impulsen geringer Amplitude nur ein einziger Impuls aufgebracht, der Schlagimpuls gemäß der Erfindung. Bei beiden Verfahren, bei Einsatz von Ultraschall und eines Schlagimpulses, erfolgt die für das thermische Fügen erforderliche Temperaturerhöhung durch eine physikalisch-chemische Wirkung im Kunststoff, aus dem die zu fügenden Folien bestehen. Zugleich werden die Vorteile verwirklicht, insbesondere der fehlende Wärmeeintrag, die auch für den Einsatz des Ultraschallsiegelns ausschlaggebend sind, jedoch ohne dass die aufwändige Anlagentechnik mit Ultraschallerzeugung und Sonotrode erforderlich ist.

Nach einer vorteilhaften Ausgestaltung des Verfahrens erfolgt der Schlagimpuls anstelle der ersten Intensität mit einer zweiten Intensität, die höher ist als die erste Intensität, sodass zusammen mit dem thermischen Fügen auch ein Trennen der Kunststofffolien in und entlang der Schweißnaht erfolgt. Die Schweißnaht selbst wird dabei längs geteilt.

Der Schlagimpuls wird insbesondere durch Federkraft, Fallgewicht oder einen mechanischen Antrieb hervorgerufen. Eine Möglichkeit des mechanischen Antriebs besteht in dessen Ausführung als Kurvenscheibengetriebe, mit dem besonders schnelle Bewegungen verzögerungsfrei und mit exakter Amplitude gesteuert werden können. Vor allem die Federkraft und das Fallgewicht können manuell in die Position gebracht werden, wo sie Kraft erzeugen, sodass das erfindungsgemäße Verfahren ohne externe Energiezufuhr ausgeführt werden kann.

Der Schlagimpuls wird durch die obere Schweißbacke oder, alternativ hierzu, durch beide Schweißbacken, die gegeneinander wirken, aufgebracht. Insbesondere bei gegeneinander wirkenden Schweißbacken können diese auch für einen schnelllaufende Prozess, beispielsweise in einer Schlauchbeutelmaschine, z. B. mit 100 Takten pro Minute, verwendet und in diesen integriert werden. Dabei können die Schweißbacken als Rollen, die beispielsweise zugleich als Vorschubrollen fungieren, ausgeführt sein, die die Vorspannkraft Fᵥ aufbringen, während die Impulskraft Fᵢ durch einen Schlag auf die Rollen auf die Kunststofffolien übertragen wird.

Die Aufgabe wir ebenfalls gelöst durch eine Vorrichtung zum Verbinden von Kunststofffolien durch thermisches Fügen, wobei die Kunststofffolien zwischen Schweißbacken entlang einer Schweißnaht verbunden werden. Nach der Erfindung umfasst die Vorrichtung ein Paar Schweißbacken, zwischen denen beim Siegelvorgang die übereinander angeordneten Kunststofffolien angeordnet werden. Die Schweißbacken werden mittels einer Vorspannkraft gegeneinander gedrückt. Eine Antriebsvorrichtung kann einen Schlagimpuls mit wenigstens einer ersten Intensität in wenigstens eine der Schweißbacken eintragen, der auf die Kunststofffolien in dem Moment des thermischen Fügens durch den Schlagimpuls einwirkt. In der Folge wird die Schweißnaht in einem entsprechend der Länge der herzustellenden Schweißnaht längs ausgedehnten Wirkbereich der Schweißbacken ausgebildet.

Bei der bevorzugten Ausführungsform besteht das Paar Schweißbacken aus wenigstens einer ersten Schweißbacke mit einem Wirkbereich mit profiliertem Querschnitt. Es hat sich weiterhin als vorteilhaft erwiesen, wenn das Paar Schweißbacken eine zweite Schweißbacke mit flächigem Wirkbereich oder mit profiliertem Querschnitt umfasst.

Der profilierte Querschnitt ist an der Wirkstelle, die mit den zu verschweißenden Folien während des Schweißvorgangs in Kontakt steht, nach einer ersten Ausführungsform als ein Radius Rₓ, bevorzugt mit Rₓ = 4 bis 10 mm, ausgebildet. Der profilierte Querschnitt ist alternativ dazu als von zwei Radien R_{y}, bevorzugt mit R_{y} = 1 bis 4 mm, beidseits begrenztes Flachprofil mit einer Breite a, bevorzugt a = 0,1 bis 0,4 mm, ausgebildet. Nach einer weiteren Alternative ist der profilierte Querschnitt keilförmig mit einem Winkel α, bevorzugt α = 2 bis 5°, gemessen gegen den flächigen Wirkbereich der zweiten Schweißbacke, der in der Regel waagerecht, jedenfalls senkrecht zur Schlagrichtung ausgerichtet ist. Die Keilspitze des keilförmigen Querschnitts ist als Radius R_{z}, bevorzugt mit R_{z} = 1 bis 4 mm, ausgebildet.

Nach einer vorteilhaften Ausführungsform sind die erste und/oder die zweite Schweißbacke als Rollwerkzeug zur Wirkung in einem Bahnlaufprozess mit fortlaufendem Vorschub ausgeführt. Die erfindungsgemäße Vorrichtung ist daher zum Einbau in Verpackungsanlagen, wobei auch etablierte Technik zum Siegeln ersetzt werden kann, geeignet.

Es hat sich als vorteilhaft erwiesen, wenn das Paar Schweißbacken aus gehärtetem Stahl mit geschliffener Oberfläche ausgeführt ist. Weiterhin enthält jede der Schweißbacken Elemente zur Befestigung an der Antriebsvorrichtung.

Die Antriebsvorrichtung wirkt nach einer ersten Ausführungsform auf die erste Schweißbacke oder nach einer zweiten Ausführungsform auf die erste und die zweite Schweißbacke. Die Antriebsvorrichtung zur Erzeugung des Schlagimpulses weist eine Feder, ein Fallgewicht oder ein mechanisches Getriebe auf. Das mechanische Getriebe ist nach einer vorteilhaften Ausgestaltung ein Kurvenscheibengetriebe, dessen Vorteile oben bereits erläutert wurden.

Die Aufgabe wird ebenfalls gelöst durch eine Verwendung einer Schlagpresse als Antriebsvorrichtung für eine Vorrichtung, wie sie zuvor beschrieben wurde. Pneumatische Schlagpressen eignen sich nicht nur zum Prägen von Metallen, sondern auch zum Markieren von Kunststoffen oder ähnlichen Produkten. Auch in der Pharmaindustrie werden kleine Schlagpressen zum Prägen von Medikamentenschachteln häufig verwendet. Mit einer Schlagfeder kann die gewünschte Schlagstärke genau eingestellt werden und man erreicht - wenn einmal justiert - bei jedem Prägevorgang im gleichen Material die gleichen Prägeergebnisse.

Der Vorspanneffekt, der auch für das erfindungsgemäße Verfahren eine entscheidende Rolle spielt, erlaubt eine exakte Positionierung des Werkstücks, Deformierungen werden verhindert. Mittels eines Spannsystems können unterschiedliche Prägewerkzeuge wie Maschinenstempel, Maschinentypenhalter und Prägewerke in diesen Maschinen eingespannt werden. Eine beispielhafte Prägepresse besitzt eine Schlagkraft von 6 kN.

Gegenüber den etablierten Siegelverfahren wie Wärme-Kontaktsiegeln oder Ultraschallsiegeln bietet das mit der Erfindung vorgeschlagene Siegelverfahren folgende Vorteile:
- kalte Werkzeuge, adiabatischer Fügeprozess,
- Verwendung bei wärmeempfindlichen Produkten möglich,
- sehr kostengünstige und robuste Anlagen- und Werkzeugtechnik,
- rein mechanische und handbetriebene Lösungen umsetzbar (Federvorspannung),
- extrem kurze Prozesszeit,
- kleinste Nahtbreiten realisierbar,
- Fügen oder Füge-Trenn-Kombination mit demselben Werkzeug umsetzbar,
- für recyclingfähige Monofolien oder Monoverbundfolien geeignet,
- Übliche Verpackungsformen (Siegelrandbeutel, Schlauchbeutel) umsetzbar,
- sehr geringer Energiebedarf, dadurch sehr hoher energetischer Wirkungsgrad.

Beim Wärmeimpulsfügen für einer PP-Folie mit einer Foliendicke von 20 ... 100 µm ist ein elektrisch erzeugter Wärmeimpuls von 0,8 Sekunden bei 165°C notwendig. Das entspricht an einer Schweißzange einem Energieverbrauch von 200 J. Für das Fügen mit dem erfindungsgemäßen Verfahren ist dem gegenüber nur ein Energiebedarf von 5 J erforderlich. Das entspricht einer Energieeinsparung von 97,5%.

Aus den zuvor genannten Vorteilen ergeben sich in den folgende vorteilhafte Anwendungsgebiete:
- Verpackungsprozess mit Kunststofffolien (technische Produkte, Lebensmittel, Medizinprodukte) sowohl für schnelllaufende Serienanwendungen als auch für Einzelprozesse bei dezentraler Produktion,
- Einsatz für kontinuierliche Prozesse aufgrund hoher Prozessgeschwindigkeit,
- Einsatz bei recyclingfähigen und kompostierbaren Folien,
- Anwendungen zum Versiegeln ohne elektrische Energie mittels Federvorspannung für mobilen Einsatz, Medizintechnik für Entwicklungshilfe (Einschweißen medizinischer Proben vor Ort), Katastrophenhilfe (Verschließen von Sandsäcken),
- Verpackung in staubbelasteter Umgebung.

Anhand der Beschreibung von Ausführungsbeispielen und ihrer Darstellung in den zugehörigen Zeichnungen wird die Erfindung nachfolgend näher erläutert. Es zeigen:
Fig. 1: schematisch eine Ansicht eines Verfahrensablaufs des erfindungsgemäßen Verfahren zum Verbinden von Kunststofffolien durch thermisches Fügen;
Fig. 2: schematisch eine perspektivische Ansicht einer Ausführungsform einer erfindungsgemäßen Schweißbacke mit einem Wirkbereich mit als Radius profiliertem Querschnitt;
Fig. 3: schematisch eine perspektivische Ansicht einer Ausführungsform einer erfindungsgemäßen Schweißbacke mit einem Wirkbereich mit eben profiliertem Querschnitt, begrenzt durch zwei Radien;
Fig. 4: schematisch eine perspektivische Ansicht einer Ausführungsform einer erfindungsgemäßen Schweißbacke mit einem Wirkbereich mit flachwinklig profiliertem Querschnitt;
Fig. 5: schematisch eine perspektivische Ansicht einer Ausführungsform einer erfindungsgemäßen ersten Schweißbacke mit einem Wirkbereich mit eben profiliertem Querschnitt;
Fig. 6: schematisch eine perspektivische Ansicht einer Ausführungsform einer erfindungsgemäßen zweiten Schweißbacke mit einem ebenen Wirkbereich;
Fig. 7: schematisch in zwei Ansichten eine Ausführungsform einer Schlagpresse;
Fig. 8: schematisch in Seitenansicht eine Ausführungsform eines kontinuierlichen Bahnlaufprozesses und
Fig. 9: schematisch in zwei Ansichten eine weitere Ausführungsform eines kontinuierlichen Bahnlaufprozesses.

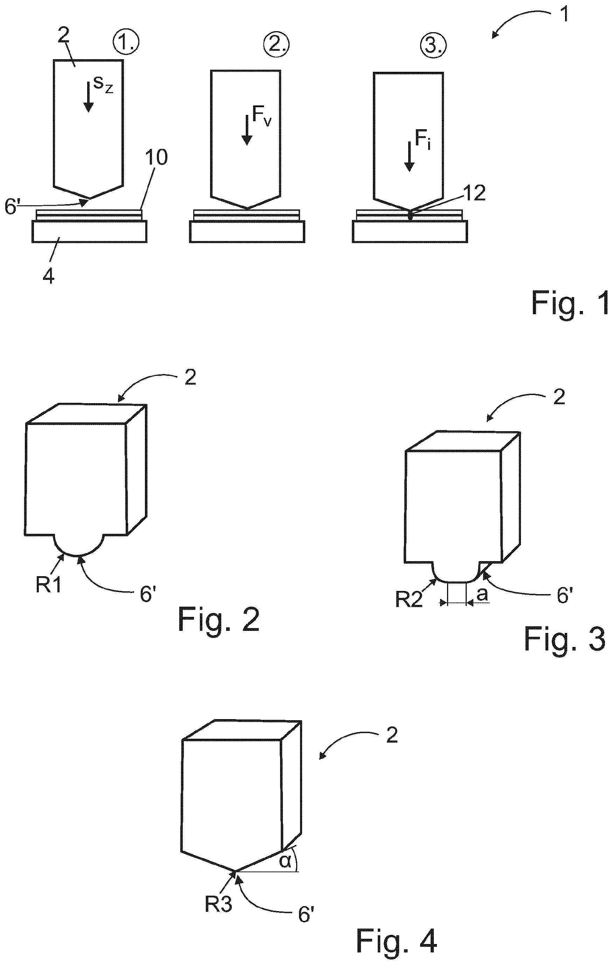

Fig. 1 zeigt schematisch eine Ansicht eines Verfahrensablaufs des erfindungsgemäßen Verfahrens zum Verbinden von Kunststofffolien 10 durch thermisches Fügen. Der Verfahrensablauf wird in 3 Schritten von links beginnend dargestellt. Zunächst wird eine erste Schweißbacke 2 über den Zustellweg s_{z} hinweg bis zur Oberfläche der Kunststofffolien 10 in Pfeilrichtung bewegt, bis ein Wirkprofil 6 die Kunststofffolien 10 berührt. Die beiden durch eine Schweißnaht zu verbindenden Kunststofffolien 10 liegen dabei auf der Oberfläche der zweiten Schweißbacke 4.

In einem zweiten Schritt wird die erste Schweißbacke 2 mit einer Vorspannkraft Fᵥ gegen die Kunststofffolien 10 gedrückt. Unter der so geschaffenen Vorlast wird im dritten Schritt die Impulskraft Fᵢ aufgebracht, die zum Ausbilden der Schweißnaht 12 führt.

Bei der dargestellten Ausgestaltung des erfindungsgemäßen Verfahrens bleiben die Kunststofffolien 10 im Bereich der Schweißnaht 12 miteinander verbunden. Ist jedoch auch möglich, durch Wahl einer höheren Impulskraft Fᵢ zu erreichen, dass an der Schweißnaht 12 zugleich ein Trennen der Kunststofffolien 10 erfolgt, sodass zwei miteinander durch die Schweißnaht 12 verbundene Kunststofffolien vorliegen, die jedoch im Bereich der Schweißnaht 12 quer getrennt sind.

Fig. 2 zeigt schematisch eine perspektivische Ansicht einer Ausführungsform einer erfindungsgemäßen ersten Schweißbacke 2 mit einem als Radius Rₓ ausgeführten, profilierten Querschnitt, der ein Wirkprofil 6 ausbildet. Bei einer Foliendicke von 70 µm beträgt der bevorzugte Radius Rₓ = 4 bis 10 mm, wobei eine gute Werkstoffbindung an der Schweißstelle und eine dichte Schweißnaht erreicht wird.

Fig. 3 zeigt schematisch eine perspektivische Ansicht einer Ausführungsform einer erfindungsgemäßen Schweißbacke 2 mit einem eben profilierten Querschnitt, begrenzt durch zwei Radien R_{y}, der ein Wirkprofil 6 ausbildet. Bei einer Foliendicke von 70 µm beträgt der bevorzugte Radius R_{y} = 1 bis 4 mm und das ebene Profil hat eine Breite a = 0,1 bis 0,5 mm.

Fig. 4 zeigt schematisch eine perspektivische Ansicht einer Ausführungsform einer erfindungsgemäßen Schweißbacke 2 mit einem flachwinklig profilierten Querschnitt, der ein Wirkprofil 6 ausbildet. Die Spitze des Winkels weist einen Radius R_{z} auf. Bei einer Foliendicke von 70 µm beträgt der bevorzugte Radius Rₓ = 4 bis 10 mm und der bevorzugte Winkel α = 2 bis 5°.

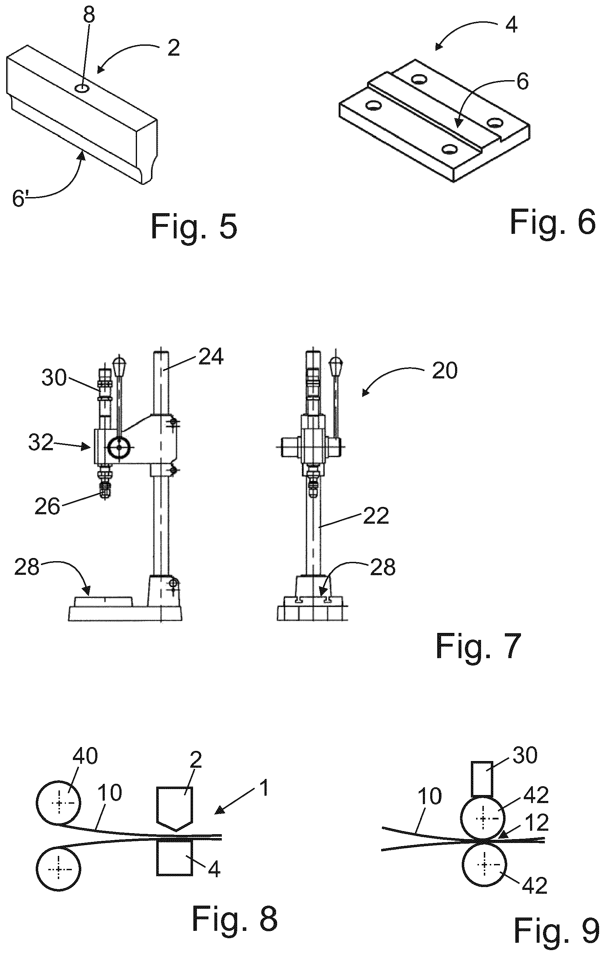

Fig. 5 zeigt schematisch eine perspektivische Ansicht einer Ausführungsform einer erfindungsgemäßen ersten Schweißbacke 2 mit einem Wirkbereich 6 mit eben profiliertem Querschnitt. Eine Aufnahmeöffnung 8 dient dem Einsatz eines hier nicht dargestellten Einspannbolzen, mit dem die erste Schweißbacke 2 in einer Schweißbackenaufnahme 26 (vergleiche Fig. 7) einer Maschine befestigt wird, die die Vorspannkraft Fᵥ und die Impulskraft Fᵢ auf die erste Schweißbacke 2 aufbringt.

Fig. 6 zeigt schematisch eine perspektivische Ansicht einer Ausführungsform einer erfindungsgemäßen zweiten Schweißbacke 4 mit einem ebenen Wirkbereich 6. Dieses wird auf einer Schweißbackenaufnahme 28 (vergleiche Fig. 7) befestigt.

Fig. 7 zeigt schematisch in Ansicht zwei Seiten eine Ausführungsform einer Schlagpresse 20, mit der das erfindungsgemäße Siegelverfahren ausgeführt werden kann. Besonders vorteilhaft ist, dass eine solche Schlagpresse 20 ohne Elektroenergie und rein manuell betrieben werden kann, insbesondere ausgeführt als Federschlagpresse gemäß dem dargestellten Ausführungsbeispiel. Die erforderliche Kraft für die Vorschubbewegung über den Zustellweg s_{z} sowie auch für die Vorspannkraft Fᵥ und die Impulskraft Fᵢ werden durch den Bediener über einen Bedienhebel 24 aufgebracht.

Entsprechend der Darstellung in Fig. 1 wird zwischen der zweiten Schweißbacke 4, auf dem die Kunststofffolien 10 aufliegen, und der ersten Schweißbacke 2, dass in einer ersten Schweißbackenaufnahme 26 befestigt ist, die Schweißnaht 12 hergestellt. Dazu wird der Bedienhebel 24 bewegt und über eine Vorschubeinrichtung 32 die erste Schweißbackenaufnahme 26 auf die zweite Schweißbackenaufnahme 28 zubewegt, bis das in der ersten Schweißbackenaufnahme 26 eingesetzte erste Schweißbacke 2 die Kunststofffolien 10 berührt.

Durch weitere Bewegung des Bedienhebels 24 wird die erforderliche Vorspannkraft Fᵥ und nach weiterer Bewegung des Bedienhebels 24, wobei eine Feder gespannt wird, die Impulskraft Fᵢ durch Auslösen der Impulserzeugung 30 auf die Kunststofffolien 10 aufgebracht. Die Schweißnaht 12 ist damit im Bereich einer Kontaktzone zwischen der ersten Schweißbacke 2 und der zweiten Schweißbacke 4 hergestellt. Der Rückhub der zweiten Schweißbackeaufnahme 26 durch Gegenbewegung des Bedienhebels 24 führt zur Freigabe der gesiegelten, miteinander verschweißten Kunststofffolien 10.

In Abhängigkeit vom gewünschten Ergebnis und von der eingestellten Höhe der Impulskraft Fᵢ können die gesiegelten Kunststofffolien 10 im Bereich der Schweißnaht 12 und entlang dieser zusätzlich und gleichzeitig getrennt werden. Dies kann vorteilhaft sein, wenn beispielsweise eine Packung durch die Schweißnaht 12 verschlossen und zugleich von einer nachfolgenden Packung getrennt werden soll.

Fig. 8 zeigt schematisch in Seitenansicht eine Ausführungsform eines kontinuierlichen Bahnlaufprozesses, bei dem die Kunststofffolie 10 von einer Folienrolle 40 abläuft. In der Vorrichtung 1 zum Verbinden von Kunststofffolien 10 durch thermisches Fügen läuft die Kunststofffolie 10 zwischen der ersten Schweißbacke 2 und der zweiten Schweißbacke 4 hindurch, wo die Herstellung der Schweißnaht 12 (in der Darstellung ist die Schweißnaht 12 noch nicht gebildet) erfolgt. Es müssen jedoch Vorkehrungen getroffen werden, um die Kontinuität des Bahnlaufprozesses auch während des Einwirkens vor allem der Vorspannkraft, aber auch des Schlagimpulses, sicherzustellen. Dies kann beispielsweise durch ein taktweises Mitführen und Rückführen der Vorrichtung 1 oder durch einen Bahnspeicher vor der Vorrichtung 1 realisiert werden.

Fig. 9 zeigt schematisch in Seitenansicht eine weitere Ausführungsform eines kontinuierlichen Bahnlaufprozesses. Durch Vorspannrollen 42, zwischen denen die Kunststofffolie 10 hindurchläuft, wird die Vorspannkraft aufgebracht. Eine Einrichtung zur Impulserzeugung 30 wirkt auf eine oder beide Vorspannrollen 42, sodass die Schweißnaht 12 erzeugt wird.

### Bezugszeichenliste

- 1: Vorrichtung
- 2: erste Schweißbacke
- 4: zweite Schweißbacke
- 6, 6': Wirkbereich, Wirkprofil
- 8: Aufnahmeöffnung
- 10: Kunststofffolie
- 12: Schweißnaht
- 20: Schlagpresse
- 22: Ständer
- 24: Bedienhebel
- 26: erste Schweißbackenaufnahme
- 28: zweite Schweißbackenaufnahme
- 30: (Einrichtung zur) Impulserzeugung
- 32: Vorschubeinrichtung
- 40: Folienrolle
- 42: Rollwerkzeug, Vorspannrolle
- a: Wirkprofilbreite
- Rₓ: erster Wirkprofilradius
- R_{y}: zweiter Wirkprofilradius
- R_{z}: dritter Wirkprofilradius
- Fᵥ: Vorspannkraft
- Fi: Impulskraft, Intensität des Schlagimpulses
- s_{z}: Zustellweg

## Patentansprüche

1. Verfahren zum Verbinden von Kunststofffolien (10) durch thermisches Fügen, wobei die Kunststofffolien (10) zwischen Schweißbacken (2, 4) entlang einer Schweißnaht (12) verbunden werden, **dadurch gekennzeichnet, dass** die übereinander angeordneten Kunststofffolien (10) in einem ersten Schritt zwischen einem Paar der Schweißbacken (2, 4) mit einer Vorspannkraft Fᵥ gegeneinander gedrückt werden und in einem zweiten Schritt ein Schlagimpuls, weitergeleitet durch wenigstens eine der Schweißbacken (2, 4), mit zumindest einer ersten Intensität (Fᵢ₁) auf die Kunststofffolien (10) einwirkt und die Schweißnaht (12) ausgebildet wird.

2. Verfahren nach Anspruch 1, wobei der Schlagimpuls mit einer zweiten Intensität (Fᵢ₂) anstelle der ersten Intensität (Fᵢ₁) erfolgt, wobei die zweite Intensität (Fᵢ₂) höher ist als die erste Intensität (Fᵢ₁), mit der Folge, dass zusammen mit dem thermischen Fügen auch ein Trennen der Kunststofffolien (10) in und entlang der Schweißnaht (12) erfolgt.

3. Verfahren nach Anspruch 1 oder 2, wobei der Schlagimpuls durch Federkraft, Fallgewicht oder einen mechanischen Antrieb hervorgerufen wird.

4. Verfahren nach einem der vorherigen Ansprüche, wobei der Schlagimpuls durch die obere Schweißbacke (2) oder durch beide Schweißbacken (2, 4), die gegeneinander wirken, aufgebracht wird.

5. Verfahren nach Anspruch 4, wobei die gegeneinander wirkenden Schweißbacken (2, 4) in einem in einem schnelllaufenden Prozess verwendet werden.

6. Vorrichtung zum Verbinden von Kunststofffolien (10) durch thermisches Fügen, wobei die Kunststofffolien (10) zwischen Schweißbacken (2, 4) entlang einer Schweißnaht (12) verbunden werden, **dadurch gekennzeichnet, dass** die Vorrichtung (1) ein Paar der Schweißbacken (2, 4) umfasst, zwischen denen beim Siegelvorgang die übereinander angeordneten Kunststofffolien (10) angeordnet werden, wobei die Schweißbacken (2, 4) mittels einer Vorspannkraft (Fᵥ) gegeneinander gedrückt werden und eine Einrichtung zur Impulserzeugung (30) während des thermischen Fügens einen Schlagimpuls mit wenigstens einer ersten Intensität (Fᵢ₁) in wenigstens einer der Schweißbacken (2, 4) einträgt, der auf die Kunststofffolien (10) einwirkt und die Schweißnaht (12) in einem entsprechend der Länge der herzustellenden Schweißnaht (12) längs ausgedehnten Wirkbereich der Schweißbacken (2, 4) ausgebildet wird.

7. Vorrichtung nach Anspruch 6, wobei das Paar Schweißbacken (2, 4) aus wenigstens einer ersten Schweißbacke (2) mit einem Wirkbereich mit profiliertem Querschnitt (6') besteht.

8. Vorrichtung nach Anspruch 7, wobei das Paar Schweißbacken (2, 4) eine zweite Schweißbacke (4) mit flächigem Wirkbereich (6) oder mit profiliertem Querschnitt (6') umfasst.

9. Vorrichtung nach Anspruch 6 oder 7, wobei der profilierte Querschnitt (6') als ein Radius Rₓ ausgebildet ist.

10. Vorrichtung nach Anspruch 6 oder 7, wobei der profilierte Querschnitt (6') als von zwei Radien R_{y} begrenztes Flachprofil mit einer Breite a ausgebildet ist.

11. Vorrichtung nach Anspruch 6 oder 7, wobei der profilierte Querschnitt (6') keilförmig mit einem Winkel α gegen den flächigen Wirkbereich der zweiten Schweißbacke (4), deren Keilspitze als Radius R_{z} ausgebildet ist.

12. Vorrichtung nach Anspruch 6 bis 11, wobei die erste und/oder die zweite Schweißbacke (2, 4) als Rollwerkzeug (42) zur Wirkung in einem Bahnlaufprozess mit fortlaufendem Vorschub ausgeführt sind.

13. Vorrichtung nach Anspruch 6 bis 12, wobei die Einrichtung zur Impulserzeugung (30) nur auf die erste Schweißbacke (2) oder die erste und die zweite Schweißbacke (2, 4) zugleich wirkt.

14. Vorrichtung nach Anspruch 6 bis 13, wobei die Einrichtung zur Impulserzeugung (30) eine Feder, ein Fallgewicht oder ein mechanisches Getriebe aufweist.

15. Verwendung einer Schlagpresse (20) als Antriebsvorrichtung für eine Vorrichtung nach einem der Ansprüche 7 bis 14.
